# EUROPEAN PATENT SPECIFICATION

(11) **EP 3 318 421 B1**
(45) Date of publication and mention of the grant of the patent: **05.06.2019**
(21) Application number: 17192277.6
(22) Date of filing: 21.09.2017
(51) Int. Cl.: B60C 11/04, B60C 11/12, B60C 11/03

(54) **TIRE**
REIFEN
PNEUMATIQUE

(30) Priority: 08.11.2016 JP 2016218231
(43) Date of publication of application: 09.05.2018
(73) Proprietor: Sumitomo Rubber Industries, Ltd., Kobe-shi, Hyogo-ken (JP)
(72) Inventor: YAMAMOTO, Tetsuya, Kobe-shi, Hyogo 651-0072 (JP)
(74) Representative: Manitz Finsterwald Patent- und Rechtsanwaltspartnerschaft mbB

(56) References cited:
- EP-A1- 3 037 282
- JP-A- 2007 331 412
- US-A- 3 708 007
- US-A- 5 361 816

## Description

### BACKGROUND OF THE INVENTION

### Field of the Invention

The present invention relates to a tire that can inhibit uneven wear of shoulder land portions. The features of the preamble of the independent claim are known from US 3 708 007 A. Related technologies are known from US 5 361 816 A, JP 2007 331412 A and EP 3 037 282 A1.

### Description of the Background Art

For example, Japanese Laid-Open Patent Publication No. 2014-180948 proposes a tire in which shoulder narrow grooves that terminate in shoulder land portions are provided for inhibiting uneven wear of the shoulder land portions while maintaining the stiffness of the shoulder land portions.

However, in the tire disclosed in Japanese Laid-Open Patent Publication No. 2014-180948, sliding wear tends to easily occur near each tread edge, and thus there is room for further improvement in inhibition of uneven wear of the shoulder land portions.

The present invention has been made in view of the above-described problem, and the main object of the present invention is to provide a tire that can inhibit uneven wear of shoulder land portions.

### SUMMARY OF THE INVENTION

The present invention, as defined in the independent claim, is directed to a tire having a tread portion in which a shoulder main groove continuously extending in a tire circumferential direction at each tread edge side and a shoulder land portion between the shoulder main groove and the tread edge are provided, wherein a plurality of shoulder narrow grooves are provided in the shoulder land portion, and each of the shoulder narrow grooves includes: a circumferential groove portion that extends in the tire circumferential direction and terminates at end portions thereof at both sides in the shoulder land portion; and an axial groove portion that extends from the circumferential groove portion to the shoulder main groove.

In the tire according to the present invention, the shoulder land portion is a rib that continuously extends in the tire circumferential direction.

In the tire according to the present invention, the axial groove portion is connected between the end portions at both sides of the circumferential groove portion.

In the tire according to the present invention, the axial groove portion includes: a first part that extends at the circumferential groove portion side along a tire axial direction; and a second part that extends from the first part to the shoulder main groove so as to be inclined relative to the tire axial direction.

In the tire according to the present invention, preferably, the circumferential groove portion includes an end portion at one side in the tire circumferential direction, and an inner end, in the tire axial direction, of the second part is located at the one side in the tire circumferential direction with respect to the end portion at the one side of the circumferential groove portion.

In the tire according to the present invention, in the circumferential groove portion, a width of a center portion in the tire circumferential direction is preferably larger than that of each of the end portions at both sides.

In the tire according to the present invention, preferably, a plurality of shoulder lug grooves are provided in the shoulder land portion and between the adjacent shoulder narrow grooves so as to extend from the tread edge toward an inner side in a tire axial direction and terminate in the shoulder land portion, and an inner end, in the tire axial direction, of each shoulder lug groove is located inward of the circumferential groove portion in the tire axial direction.

In the tire according to the present invention, each shoulder lug groove preferably includes: an axial portion that extends along the tire axial direction at an outer side in the tire axial direction with respect to the circumferential groove portion; and an inclined portion that extends at an inner side in the tire axial direction with respect to the circumferential groove portion so as to be inclined relative to the tire axial direction.

In the tire according to the present invention, at least a part of the inclined portion preferably extends along the axial groove portion.

In the tire according to the present invention, preferably, a middle land portion is demarcated inward of the shoulder main groove in a tire axial direction, a plurality of outer middle lug narrow grooves are provided in the middle land portion so as to extend from the shoulder main groove toward an inner side in the tire axial direction and terminate in the middle land portion, and each outer middle lug narrow groove has a smaller length in the tire axial direction than each shoulder narrow groove.

In the tire according to the present invention, preferably, the axial groove portion includes: a first part that extends at the circumferential groove portion side along the tire axial direction; and a second part that extends from the first part to the shoulder main groove so as to be inclined relative to the tire axial direction, and each outer middle lug narrow groove is inclined in a direction opposite to that of the second part.

A plurality of shoulder narrow grooves are provided in the shoulder land portion of the tire according to the present invention, and each shoulder narrow groove includes: a circumferential groove portion that extends in the tire circumferential direction and terminates at end portions thereof at both sides in the shoulder land portion; and an axial groove portion that extends from the circumferential groove portion to the shoulder main groove.

Generally, sliding wear of the tread portion occurs on a tread ground-contact surface and at each tread edge side at which the tire outer diameter is smaller. That is, this is based on the fact that, since the tire outer diameter is smaller at each tread edge side than at the tire equator side, during running of the tire, the tread edge side slides relative to a road surface and further great wear energy acts thereon. In the present invention, since the circumferential groove portion is provided outward of each axial groove portion in the tire axial direction, an outer portion, in the tire axial direction, of the axial groove portion can be easily opened during ground contact, resulting in a reduction in an amount of sliding relative to a road surface. Accordingly, the tire according to the present invention can effectively inhibit sliding wear at each tread edge side.

### BRIEF DESCRIPTION OF THE DRAWINGS

FIG. 1 is a development of a tread portion of a tire according to an embodiment of the present invention;
FIG. 2 is an enlarged view of a shoulder land portion in FIG. 1;
FIG. 3 is an enlarged view of a middle land portion in FIG. 1; and
FIG. 4 is a development of a tread portion of a tire according to a comparative example.

### DESCRIPTION OF THE PREFERRED EMBODIMENTS

Hereinafter, an embodiment of the present invention will be described with reference to the drawings.

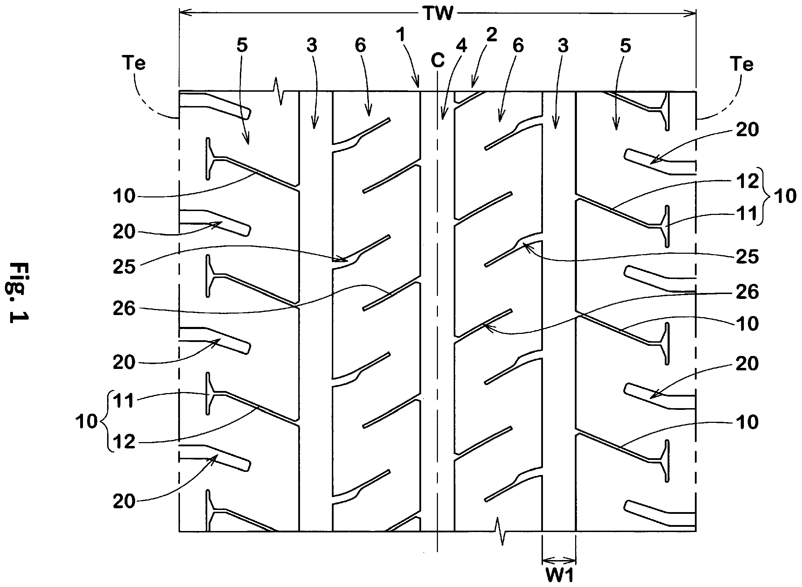

FIG. 1 shows a development of a tread portion 2 of a tire 1 according to the present embodiment. The tire 1 according to the present embodiment can be used as various tires such as a passenger car pneumatic tire or a heavy-duty pneumatic tire, and a non-pneumatic tire the interior of which is not filled with pressurized air. The tire 1 according to the present embodiment is suitably used as a passenger car pneumatic tire.

As shown in FIG. 1, a pair of shoulder main grooves 3 and a crown main groove 4 therebetween are provided in the tread portion 2 of the tire 1.

Each shoulder main groove 3 continuously extends in the tire circumferential direction at an endmost tread edge Te side. Each shoulder main groove 3 according to the present embodiment extends, for example, straight, but may extend zigzag.

The "tread edge Te" is a ground contact position at the outermost side in the tire axial direction when: a normal load is applied to the tire 1 in a normal state where the tire 1 is mounted to a normal rim (not shown) and inflated to a normal internal pressure and no load is applied to the tire 1; and the tire 1 is brought into contact with a plane at a camber angle of 0°.

The "normal rim" is a rim that is defined, in a standard system including a standard on which the tire is based, by the standard for each tire, and is, for example, the "Standard Rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The distance in the tire axial direction from a tire equator C to a groove center line of each shoulder main groove 3 is, for example, preferably 0.20 to 0.30 times of a tread width TW. The tread width TW is the distance in the tire axial direction between a pair of tread edges Te in the above normal state.

The crown main groove 4 is provided, for example, as a single groove on the tire equator C, and continuously extends straight in the tire circumferential direction. However, the crown main groove 4 is not limited to such a form, and the crown main groove 4 may be provided at each of both sides of the tire equator C.

A groove width W1 of each of the main grooves 3 and 4 is, for example, preferably 6 to 8% of the tread width TW. The groove depth of each of the main grooves 3 and 4 is, for example, preferably 5 to 10 mm.

As a result of provision of the above-described main grooves 3 and 4, the tread portion 2 is provided with a pair of shoulder land portions 5 and a pair of middle land portions 6. Each shoulder land portion 5 is demarcated between the shoulder main groove 3 and the tread edge Te. Each middle land portion 6 is demarcated between the shoulder main groove 3 and the crown main groove 4.

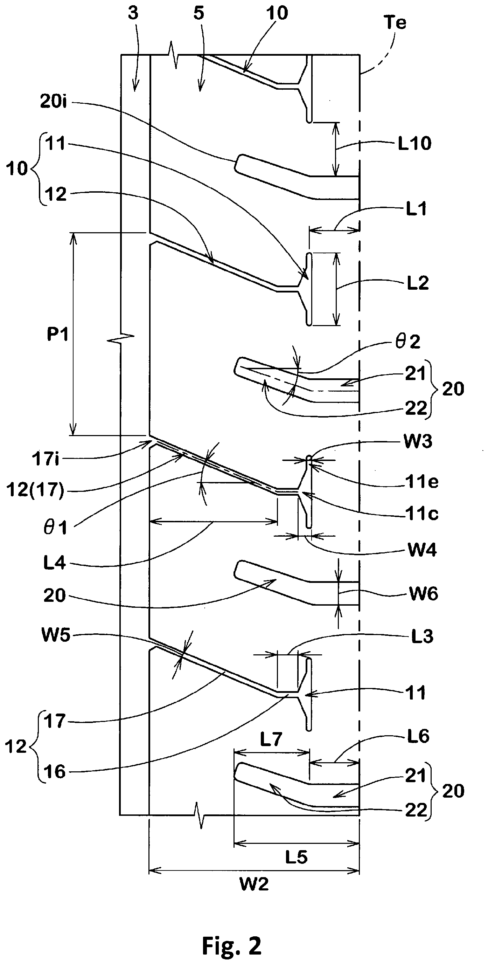

FIG. 2 shows an enlarged view of the shoulder land portion 5. As shown in FIG. 2, each shoulder land portion 5 according to the present embodiment is, for example, a rib in which any axial groove that fully traverses the land portion from the tread edge Te to the shoulder main groove 3 is not provided and which continuously extends in the tire circumferential direction. A width W2, in the tire axial direction, of the shoulder land portion 5 according to the present embodiment is, for example, preferably 0.15 to 0.30 times of the tread width TW (shown in FIG. 1, and the same applies hereinafter). However, the shoulder land portion 5 is not limited to such a form.

In the shoulder land portion 5, a plurality of shoulder narrow grooves 10 are provided.

Each shoulder narrow groove 10 includes: a circumferential groove portion 11 that extends in the tire circumferential direction and terminates at end portions thereof at both sides in the shoulder land portion 5; and an axial groove portion 12 that extends from the circumferential groove portion 11 to the shoulder main groove 3.

Generally, sliding wear of the tread portion 2 occurs on a tread ground-contact surface and at each tread edge Te side at which the tire outer diameter is smaller. That is, this is based on the fact that, since the tire outer diameter is smaller at each tread edge Te side than at the tire equator C side, during running of the tire, the tread edge Te side slides relative to a road surface and further great wear energy acts thereon. In the present invention, since the circumferential groove portion 11 is provided outward of each axial groove portion 12 in the tire axial direction, an outer portion, in the tire axial direction, of the axial groove portion 12 can be easily opened during ground contact, resulting in a reduction in an amount of sliding relative to a road surface. Accordingly, the tire 1 according to the present invention can effectively inhibit sliding wear at each tread edge Te side.

In addition, also during turning, the tire 1 according to the present invention can inhibit strain, in the tire axial direction, of a ground-contact surface of the shoulder land portion 5 and uniformly bring the entire ground contact surface into contact with the ground, by the circumferential groove portion 11 of each shoulder narrow groove 10 being moderately deformed. Thus, uneven wear of the shoulder land portion 5 is effectively inhibited.

A distance L1 in the tire axial direction from the tread edge Te to the circumferential groove portion 11 is, for example, preferably 0.20 to 0.30 times of the width W2 of the shoulder land portion 5. Such a circumferential groove portion 11 can inhibit a decrease in the stiffness of a center portion, in the tire axial direction, of the shoulder land portion 5, and can exert the above-described effect while maintaining steering stability.

The circumferential groove portion 11 extends, for example, at an angle of not greater than 10° and more preferably not greater than 5° with respect to the tire circumferential direction. As a preferable mode, the circumferential groove portion 11 according to the present embodiment extends parallel to the tire circumferential direction.

In the circumferential groove portion 11, for example, the width of a center portion 11c is larger than that of each of end portions 11e at both sides. A width W3 of each end portion 11e is, for example, preferably 0.5 to 1.5 mm. The center portion 11c has, for example, a maximum width W4 at the center position thereof in the tire circumferential direction. The maximum width W4 of the center portion 11c is, for example, preferably 1.5 to 2.0 times of the width W3 of the end portion 11e. Such a circumferential groove portion 11 can also be expected to have a water absorbing property during wet running.

The circumferential groove portion 11 has, for example, a smaller depth than the shoulder main groove 3. Specifically, the depth of the circumferential groove portion 11 is, for example, preferably 3.0 to 8.0 mm.

A length L2, in the tire circumferential direction, of the circumferential groove portion 11 is, for example, preferably not less than 0.25 times and more preferably not less than 0.30 times of an arrangement pitch PI, in the tire circumferential direction, of the shoulder narrow grooves 10, and preferably not greater than 0.45 and more preferably not greater than 0.40 times of the arrangement pitch P1. Such a circumferential groove portion 11 can enhance steering stability and wear resistance in a balanced manner.

The axial groove portion 12 extends from the circumferential groove portion 11 to the shoulder main groove 3 with a uniform width W5. The width W5 of the axial groove portion 12 is, for example, 0.5 to 1.5 mm.

The axial groove portion 12 is, for example, connected between the end portions 11e at both sides of the circumferential groove portion 11. Specifically, the axial groove portion 12 is connected to the above-described center portion 11c of the circumferential groove portion 11. More specifically, the axial groove portion 12 is connected to a maximum width portion of the center portion 11c.

The axial groove portion 12 includes: a first part 16 that extends at the circumferential groove portion 11 side along the tire axial direction; and a second part 17 that extends from the first part 16 to the shoulder main groove 3 so as to be inclined relative to the tire axial direction. The first part 16 extending along the tire axial direction can inhibit local chipping of the land portion, etc., at a portion thereof connected to the circumferential groove portion 11. The second part 17 extending so as to be inclined relative to the tire axial direction can also generate frictional force in the tire axial direction by the edge thereof and further enhance steering stability on a wet road surface.

In order to further enhance the above-described effect, a length L3, in the tire axial direction, of the first part 16 is, for example, preferably 0.05 to 0.15 times of the width W2, in the tire axial direction, of the shoulder land portion 5.

The second part 17 is inclined, for example, toward one side in the tire circumferential direction (the upper side in FIG. 2) while extending toward the shoulder main groove 3 side. As a preferable mode, in the present embodiment, the second parts 17 of the respective shoulder narrow grooves 10 are inclined in the same direction. In addition, the entirety of the second part 17 of each shoulder narrow groove 10 according to the present embodiment is formed in a straight shape. An angle θ1 of the second part 17 with respect to the tire axial direction is preferably not less than 15° and more preferably not less than 20° and is preferably not greater than 30° and more preferably not greater than 25°. Such a second part 17 can exert frictional force in the tire axial direction by the edge thereof while inhibiting uneven wear of the shoulder land portion 5.

An inner end 17i, in the tire axial direction, of the second part 17 is, for example, preferably located at one side in the tire circumferential direction (the upper side in FIG. 2) with respect to the end portion 11e, at the one side in the tire circumferential direction, of the circumferential groove portion 11. Such a second part 17 can inhibit strain of the ground-contact surface of the shoulder land portion 5 over a broader range thereby to inhibit uneven wear of the shoulder land portion 5.

A length L4, in the tire axial direction, of the second part 17 is preferably not less than 0.50 times and more preferably not less than 0.55 times of the width W2, in the tire axial direction, of the shoulder land portion 5, and is preferably not greater than 0.65 times and more preferably not greater than 0.60 times of the width W2. Such a second part 17 can inhibit strain of the ground-contact surface of the shoulder land portion 5 while maintaining the stiffness of the shoulder land portion 5.

In each shoulder land portion 5 according to the present embodiment, shoulder lug grooves 20 are provided between the adjacent shoulder narrow grooves 10. As a preferable mode, the shoulder narrow grooves 10 and the shoulder lug grooves 20 according to the present embodiment are alternately provided in the tire circumferential direction.

Each shoulder lug groove 20, for example, extends from the tread edge Te toward the inner side in the tire axial direction and terminates in the shoulder land portion 5. Such a shoulder lug groove 20 can enhance wet performance while maintaining the stiffness of the shoulder land portion 5.

An inner end 20i, in the tire axial direction, of the shoulder lug groove 20 according to the present embodiment is, for example, preferably located inward of the circumferential groove portion 11 in the tire axial direction, and more preferably located inward of the first part 16 of the axial groove portion 12 in the tire axial direction. Specifically, a length L5, in the tire axial direction, of the shoulder lug groove 20 is preferably 0.55 to 0.70 times of the width W2 of the shoulder land portion 5. Such a shoulder lug groove 20 can enhance steering stability on a dry road surface and on a wet road surface in a balanced manner.

Each shoulder lug groove 20 includes, for example, an axial portion 21 and an inclined portion 22. The axial portion 21 extends, for example, at an angle of not greater than 5° with respect to the tire axial direction, and extends along the tire axial direction in the present embodiment. The axial portion 21 is located outward of the circumferential groove portion 11 of the shoulder narrow groove 10 in the tire axial direction and connected to the tread edge Te.

A length L6, in the tire axial direction, of the axial portion 21 is, for example, preferably larger than the length L3 of the first part 16 of the axial groove portion 12 of the shoulder narrow groove 10. Specifically, the length L6 of the axial portion 21 is 0.20 to 0.35 times of the width W2 of the shoulder land portion 5. Such an axial portion 21 can inhibit damage such as local chipping of the land portion at a portion where the shoulder lug groove 20 and the tread edge Te are connected to each other.

A distance L10 in the tire circumferential direction from the end of the circumferential groove portion 11 to the axial portion 21 is, for example, preferably 0.20 to 0.30 times of the arrangement pitch PI of the shoulder narrow grooves 10. Such an axial portion 21 can enhance wear resistance and wandering performance in a balanced manner.

The inclined portion 22 is, for example, provided inward of the axial portion 21 in the tire axial direction and extends so as to be inclined relative to the tire axial direction in the same direction as the second part 17 of the axial groove portion 12. The inclined portion 22 according to the present embodiment is located inward of the circumferential groove portion 11 of the shoulder narrow groove 10 in the tire axial direction and terminates in the shoulder land portion 5. A length L7, in the tire axial direction, of the inclined portion 22 is, for example, preferably larger than the length L6 of the axial portion 21. Specifically, the length L7 of the inclined portion 22 is, for example, preferably 0.30 to 0.40 times of the width W2, in the tire axial direction, of the shoulder land portion 5.

An angle θ2 of the inclined portion 22 with respect to the tire axial direction is, for example, preferably 15° to 30°. As a more preferable mode, in the present embodiment, at least a part of the inclined portion 22 extends along the second part 17 of the axial groove portion 12. Such an inclined portion 22 serves to guide water within the groove to the tread edge Te side during wet running while inhibiting uneven wear of the shoulder land portion 5.

In order to exert excellent steering stability on a dry road surface and on a wet road surface, a groove width W6 of the shoulder lug groove 20 is, for example, preferably 0.30 to 0.40 times of the groove width W1 (shown in FIG. 1) of the shoulder main groove 3.

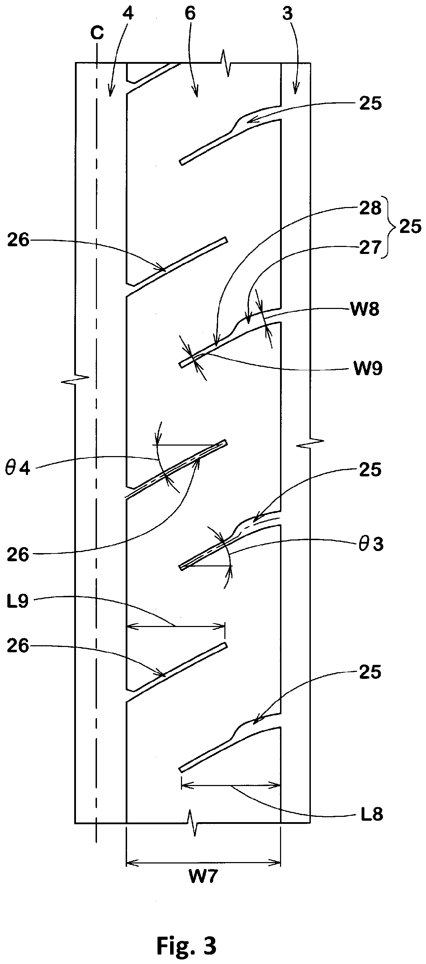

FIG. 3 shows an enlarged view of the middle land portion 6. As shown in FIG. 3, each middle land portion 6 according to the present embodiment is, for example, a rib in which any axial groove that fully traverses the land portion from the shoulder main groove 3 to the crown main groove 4 is not provided and which continuously extends in the tire circumferential direction. A width W7, in the tire axial direction, of the middle land portion 6 according to the present embodiment is, for example, preferably 0.15 to 0.25 times of the tread width TW.

In the middle land portion 6, for example, a plurality of outer middle lug narrow grooves 25 and a plurality of inner middle lug narrow grooves 26 are provided. Each outer middle lug narrow groove 25, for example, extends from the shoulder main groove 3 toward the inner side in the tire axial direction and terminates in the middle land portion 6. Each inner middle lug narrow groove 26, for example, extends from the crown main groove 4 toward the outer side in the tire axial direction and terminates in the middle land portion 6. In a preferable mode, the outer middle lug narrow grooves 25 and the inner middle lug narrow grooves 26 are alternately provided in the tire circumferential direction.

Each outer middle lug narrow groove 25, for example, terminates at the inner side in the tire axial direction with respect to the center position, in the tire axial direction, of the middle land portion 6. As a more preferable mode, the outer middle lug narrow groove 25 according to the present embodiment has a smaller length in the tire axial direction than the shoulder narrow groove 10 (shown in FIG. 2). Specifically, a length L8, in the tire axial direction, of the outer middle lug narrow groove 25 is, for example, preferably 0.60 to 0.70 times of the width W7 of the middle land portion 6. Such an outer middle lug narrow groove 25 serves to decrease the stiffness difference between the shoulder land portion 5 and the middle land portion 6 thereby to make progress of wear of the shoulder land portion 5 and the middle land portion 6 uniform.

The outer middle lug narrow groove 25 is, for example, inclined relative to the tire axial direction. The outer middle lug narrow groove 25 according to the present embodiment is, for example, inclined in a direction opposite to that of the second part 17 (shown in FIG. 2) of the axial groove portion 12 of the shoulder narrow groove 10. As a preferable mode, the outer middle lug narrow groove 25 is inclined at an angle θ3 smaller than the angle θ1 of the second part 17 with respect to the tire axial direction. Specifically, the angle θ3 of the outer middle lug narrow groove 25 is preferably 15° to 30°. Such an outer middle lug narrow groove 25 also exerts frictional force in the tire axial direction by the edge thereof while inhibiting wear of the middle land portion 6, so that further steering stability on a wet road surface is enhanced.

In order exert excellent steering stability on a dry road surface and on a wet road surface, the outer middle lug narrow groove 25 includes: a wide width portion 27 connected to the shoulder main groove 3; and a narrow width portion 28 that is connected to the inner side, in the tire axial direction, of the wide width portion 27 and has a smaller groove width than the wide width portion 27. A groove width W8 of the wide width portion 27 is, for example, 2.0 to 4.5 mm. A groove width W9 of the narrow width portion 28 is, for example, 0.5 to 15 mm.

Each inner middle lug narrow groove 26, for example, terminates at the outer side in the tire axial direction with respect to the center position, in the tire axial direction, of the middle land portion 6. As a more preferable mode, the inner middle lug narrow groove 26 according to the present embodiment has a smaller length in the tire axial direction than the shoulder narrow groove 10. Specifically, a length L9, in the tire axial direction, of the inner middle lug narrow groove 26 is, for example, preferably 0.60 to 0.70 times of the width W7 of the middle land portion 6. As a more preferable mode, the inner middle lug narrow groove 26 according to the present embodiment has a length in the tire axial direction equal to that of the outer middle lug narrow groove 25. Such an inner middle lug narrow groove 26 can inhibit strain of a ground-contact surface of the middle land portion 6 together with the outer middle lug narrow groove 25 and further inhibit uneven wear of the middle land portion 6.

The inner middle lug narrow groove 26 is, for example, inclined relative to the tire axial direction in the same direction as the outer middle lug narrow groove 25. Specifically, an angle θ4 of the inner middle lug narrow groove 26 with respect to the tire axial direction is, for example, preferably 15° to 30°. As a more preferable mode, the inner middle lug narrow groove 26 according to the present embodiment extends along the outer middle lug narrow groove 25. Such an inner middle lug narrow groove 26 can also exert frictional force in the tire axial direction by the edge thereof while inhibiting uneven wear of the middle land portion 6.

Although the tire according to the embodiment of the present invention has been described in detail above, the present invention is not limited to the above specific embodiment, and various modifications can be made to implement the present invention.

### EXAMPLES

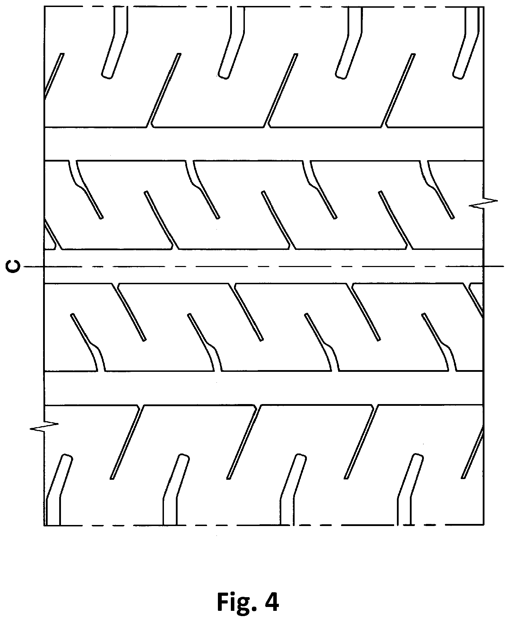

Tires with a size of 235/65R16 having the basic pattern shown in FIG. 1 were produced as test tires on the basis of specifications in Table 1. Tires provided with shoulder narrow grooves not having any circumferential groove portion as shown in FIG. 4 were produced as test tires of a comparative example. Each test tire was tested for wear resistance and steering stability on a dry road surface and on a wet road surface. The common specifications and the test methods for each test tire are as follows.

Mount rim: 16×6.5J
Tire internal pressure: front wheel 340 kPa, rear wheel 420 kPa
Test vehicle: a rear-wheel-drive car having an engine displacement of 2000 cc Tire mounted positions: all wheels

### <Wear Resistance>

The wear amount of the shoulder land portion was measured after running on a dry road surface for a certain distance. The results are indexes obtained on the basis of the wear amount of the comparative example being defined as 100. A lower value indicates better wear resistance.

### <Steering Stability on Dry Road Surface and on Wet Road Surface>

Sensory evaluation was made by a driver for steering stability on a dry road surface and on a wet road surface. The results are scores obtained on the basis of the result of the comparative example being defined as 100. A higher value indicates better steering stability on the dry road surface or the wet road surface.

The test results are shown in Table 1.

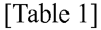

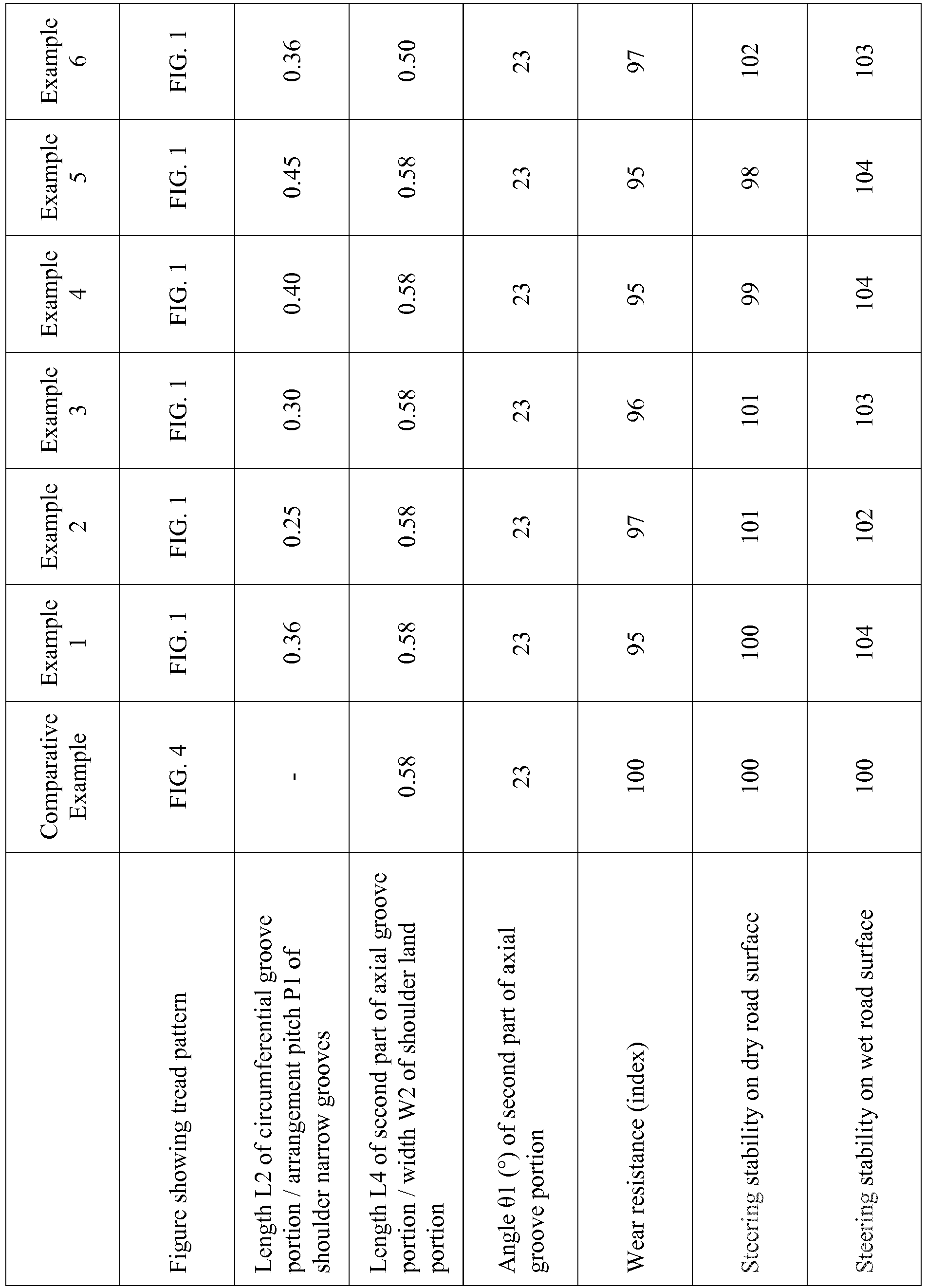

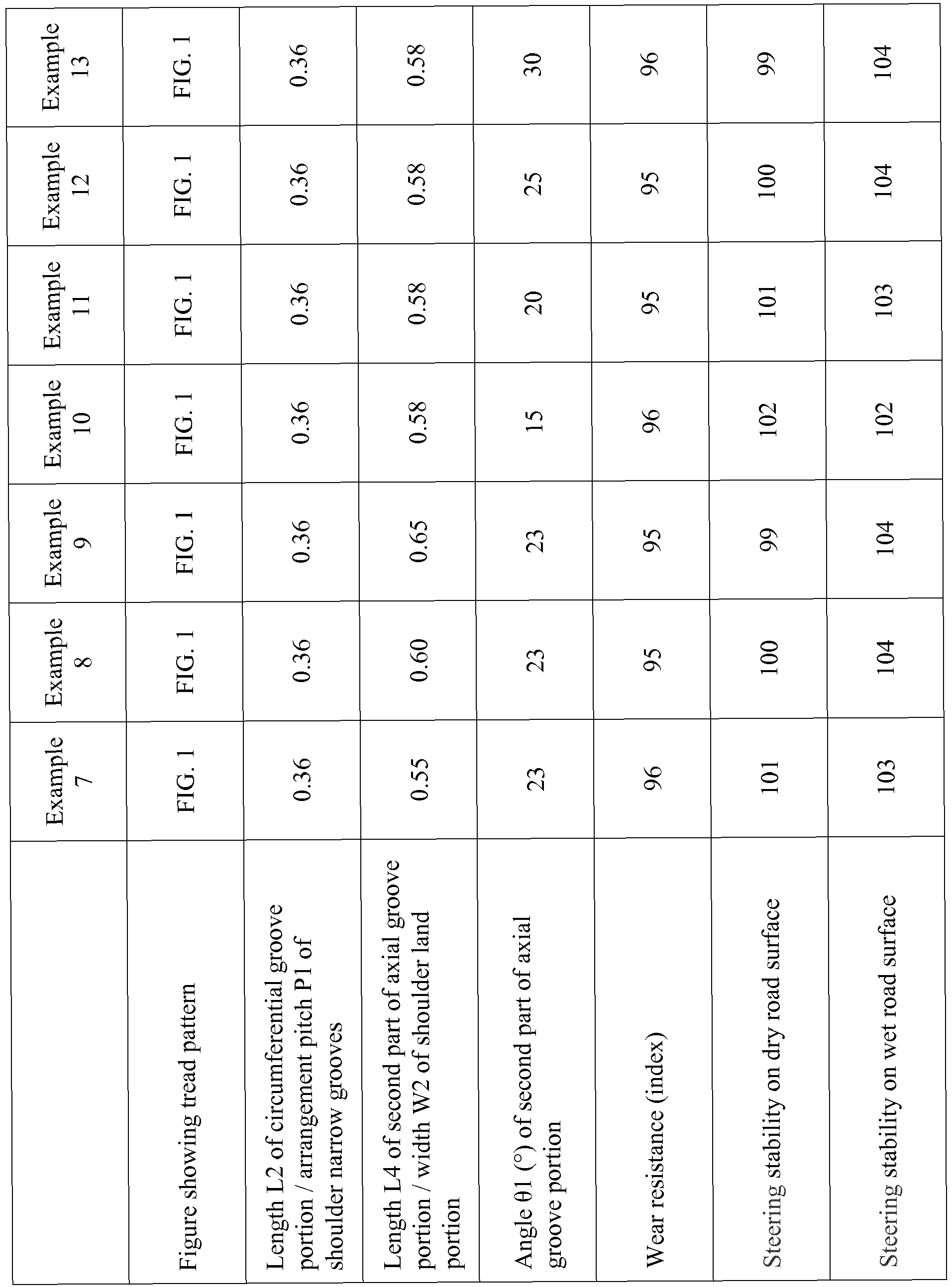

As a result of the tests, it was confirmed that the tires of the examples exert excellent wear resistance and further uneven wear is inhibited therein. In addition, it was confirmed that the tires of the examples maintain steering stability on the dry road surface and improves steering stability on the wet road surface.

## Claims

1. A tire (1) having a tread portion (2) in which a shoulder main groove (3) continuously extending in a tire circumferential direction at each tread edge (Te) side and a shoulder land portion (5) between the shoulder main groove (3) and the tread edge (Te) are provided, wherein
the tread edge (Te) is a ground contact position at the outermost side in the tire axial direction when a normal load is applied to the tire in a normal state where the tire is mounted to a normal rim and inflated to a normal internal pressure and no load is applied to the tire and the tire is brought into contact with a plane at a camber angle of 0°,
a plurality of shoulder narrow grooves (10) are provided in the shoulder land portion (5),
each of the shoulder narrow grooves (10) includes: a circumferential groove portion (11) that extends in the tire circumferential direction and terminates at end portions (11e) thereof at both sides in the shoulder land portion (5); and an axial groove portion (12) that extends from the circumferential groove portion (11) to the shoulder main groove (3),
the shoulder land portion (5) is a rib that continuously extends in the tire circumferential direction,
the axial groove portion (12) is connected between the end portions (11e) at both sides of the circumferential groove portion (11),
**characterized in that**
the axial groove portion (12) includes: a first part (16) that extends at the circumferential groove portion (11) side along a tire axial direction; and a second part (17) that extends from the first part (16) to the shoulder main groove (3) so as to be inclined relative to the tire axial direction.

2. The tire (1) according to claim 1, wherein
the circumferential groove portion (11) includes an end portion (11e) at one side in the tire circumferential direction, and
an inner end (17i), in the tire axial direction, of the second part (17) is located at the one side in the tire circumferential direction with respect to the end portion (11e) at the one side of the circumferential groove portion (11).

3. The tire (1) according to any one of claims 1 to 2, wherein in the circumferential groove portion (11), a width of a center portion (11c) in the tire circumferential direction is larger than that of each of the end portions (11e) at both sides.

4. The tire (1) according to any one of claims 1 to 3, wherein
a plurality of shoulder lug grooves (20) are provided in the shoulder land portion (5) and between the adjacent shoulder narrow grooves (10) so as to extend from the tread edge (Te) toward an inner side in a tire axial direction and terminate in the shoulder land portion (5), and
an inner end (20i), in the tire axial direction, of each shoulder lug groove (20) is located inward of the circumferential groove portion (11) in the tire axial direction.

5. The tire (1) according to claim 4, wherein each shoulder lug groove (20) includes: an axial portion (21) that extends along the tire axial direction at an outer side in the tire axial direction with respect to the circumferential groove portion (11); and an inclined portion (22) that extends at an inner side in the tire axial direction with respect to the circumferential groove portion (11) so as to be inclined relative to the tire axial direction.

6. The tire (1) according to claim 5, wherein at least a part of the inclined portion (22) extends along the axial groove portion (12).

7. The tire (1) according to any one of claims 1 to 6, wherein
a middle land portion (6) is demarcated inward of the shoulder main groove (3) in a tire axial direction,
a plurality of outer middle lug narrow grooves (25) are provided in the middle land portion (6) so as to extend from the shoulder main groove (3) toward an inner side in the tire axial direction and terminate in the middle land portion (6), and
each outer middle lug narrow groove (25) has a smaller length in the tire axial direction than each shoulder narrow groove (10).

8. The tire (1) according to claim 7, wherein
each outer middle lug narrow groove (25) is inclined in a direction opposite to that of the second part (17) of the axial groove portion (12).

## Patentansprüche

1. Reifen (1) mit einem Laufflächenabschnitt (2), in welchem eine Schulterhauptrille (3), die sich kontinuierlich in einer Reifenumfangsrichtung auf jeder Seite von Laufflächenkanten (Te) erstreckt, und ein Schulterlandabschnitt (5) zwischen der Schulterhauptrille (3) und der Laufflächenkante (Te) vorgesehen sind,
wobei die Laufflächenkante (Te) eine Bodenkontaktposition auf der äußersten Seite in der Reifenaxialrichtung ist, wenn eine normale Last auf den Reifen in einem normalen Zustand aufgebracht wird, in welchem der Reifen auf eine normale Felge aufgezogen und auf einen normalen Innendruck aufgeblasen ist und keine Last auf den Reifen ausgeübt wird und der Reifen mit einem Sturzwinkel von 0° mit einer Ebene in Kontakt gebracht ist,
eine Vielzahl von schmalen Schulterrillen (10) in dem Schulterlandabschnitt (5) vorgesehen ist,
eine jede der schmalen Schulterrillen (10) umfasst: einen Umfangsrillenabschnitt (11), der sich in der Reifenumfangsrichtung erstreckt und an seinen Endabschnitten (11e) auf beiden Seiten in dem Schulterlandabschnitt (5) endet; und einen axialen Rillenabschnitt (12), der sich von dem Umfangsrillenabschnitt (11) zu der Schulterhauptrille (3) erstreckt,
wobei der Schulterlandabschnitt (5) eine Rippe ist, die sich kontinuierlich in der Reifenumfangsrichtung erstreckt,
der axiale Rillenabschnitt (12) zwischen den Endabschnitten (11e) auf beiden Seiten des Umfangsrillenabschnitts (11) verbunden ist,
**dadurch gekennzeichnet, dass**
der axiale Rillenabschnitt (12) umfasst: einen ersten Teil (16), der sich auf der Seite des Umfangsrillenabschnitts (11) entlang einer Reifenaxialrichtung erstreckt; und einen zweiten Teil (17), der sich von dem ersten Teil (16) zu der Schulterhauptrille (3) derart erstreckt, dass er relativ zu der Reifenaxialrichtung geneigt ist.

2. Reifen (1) nach Anspruch 1, wobei
der Umfangsrillenabschnitt (11) einen Endabschnitt (11e) auf einer Seite in der Reifenumfangsrichtung umfasst, und
ein inneres Ende (17i) in der Reifenaxialrichtung des zweiten Teils (17) auf der einen Seite in der Reifenumfangsrichtung in Bezug auf den Endabschnitt (11e) auf der einen Seite des Umfangsrillenabschnitts (11) angeordnet ist.

3. Reifen (1) nach einem der Ansprüche 1 bis 2, wobei in dem Umfangsrillenabschnitt (11) eine Breite eines Mittelabschnitts (11c) in der Reifenumfangsrichtung größer ist als die eines jeden der Endabschnitte (11e) auf beiden Seiten.

4. Reifen (1) nach einem der Ansprüche 1 bis 3, wobei
eine Vielzahl von Schulterstollenrillen (20) in dem Schulterlandabschnitt (5) und zwischen den benachbarten schmalen Schulterrillen (10) derart vorgesehen ist, dass sie sich von der Laufflächenkante (Te) zu einer Innenseite in einer Reifenaxialrichtung hin erstrecken und in dem Schulterlandabschnitt (5) enden, und
ein inneres Ende (20i) in der Reifenaxialrichtung jeder Schulterstollenrille (20) innen von dem Umfangsrillenabschnitt (11) in der Reifenaxialrichtung angeordnet ist.

5. Reifen (1) nach Anspruch 4, wobei jede Schulterstollenrille (20) umfasst:
einen axialen Abschnitt (21), der sich entlang der Reifenaxialrichtung auf einer Außenseite in der Reifenaxialrichtung in Bezug auf den Umfangsrillenabschnitt (11) erstreckt; und einen geneigten Abschnitt (22), der sich auf einer Innenseite in der Reifenaxialrichtung in Bezug auf den Umfangsrillenabschnitt (11) derart erstreckt, dass er relativ zu der Reifenaxialrichtung geneigt ist.

6. Reifen (1) nach Anspruch 5, wobei sich mindestens ein Teil des geneigten Abschnitts (22) entlang des axialen Rillenabschnitts (12) erstreckt.

7. Reifen (1) nach einem der Ansprüche 1 bis 6, wobei
ein mittlerer Landabschnitt (6) nach innen von der Schulterhauptrille (3) in einer Reifenaxialrichtung abgegrenzt ist,
eine Vielzahl von äußeren mittleren schmalen Stollenrillen (25) in dem mittleren Landabschnitt (6) derart vorgesehen ist, dass sie sich von der Schulterhauptrille (3) zu einer Innenseite in Reifenaxialrichtung hin erstrecken und in dem mittleren Landabschnitt (6) enden, und
jede äußere mittlere schmale Stollenrille (25) eine geringere Länge in der Reifenaxialrichtung als jede schmale Schulterstollenrille (10) aufweist.

8. Reifen (1) nach Anspruch 7, wobei jede äußere mittlere schmale Stollenrille (25) in eine Richtung geneigt ist, die der des zweiten Teils (17) des axialen Rillenabschnitts (12) entgegengesetzt ist.

## Revendications

1. Pneumatique (1) ayant une portion formant bande de roulement (2) dans laquelle sont prévus une rainure principale d'épaulement (3) s'étendant en continu dans une direction circonférentielle du pneumatique sur le côté de chaque bord de roulement (Te) et une portion en relief d'épaulement (5) entre la rainure principale d'épaulement (3) et le bord de roulement (Te), dans lequel
le bord de roulement (Te) est une position de contact au sol au niveau du côté le plus à l'extérieur dans la direction axiale du pneumatique quand une charge normale est appliquée sur le pneumatique, dans un état normal dans lequel le pneumatique est monté sur une jante normale et est gonflé à une pression interne normale et qu'aucune charge n'est appliquée sur le pneumatique et que le pneumatique est mis en contact avec un plan à un angle de cambrure de 0°,
une pluralité de rainures étroites d'épaulement (10) sont prévues dans la portion en relief d'épaulement (5),
chacune des rainures étroites d'épaulement (10) inclut : une portion de rainure circonférentielle (11) qui s'étend dans la direction circonférentielle du pneumatique et se termine au niveau des portions d'extrémité (11e) de celle-ci des deux côtés dans la portion en relief d'épaulement (5) ; et une portion de rainure axiale (12) qui s'étend depuis la portion de rainure circonférentielle (11) vers la rainure principale d'épaulement (3),
la portion en relief d'épaulement (5) est une nervure qui s'étend en continu dans la direction circonférentielle du pneumatique,
la portion de rainure axiale (12) est reliée entre les portions d'extrémité (11e) des deux côtés de la portion de rainure circonférentielle (11),
**caractérisé en ce que**
la portion de rainure axiale (12) inclut : une première partie (16) qui s'étend au niveau du côté de la portion de rainure circonférentielle (11) le long d'une direction axiale du pneumatique ; et une deuxième partie (17) qui s'étend depuis la première partie (16) vers la rainure principale d'épaulement (3) de manière à être inclinée relativement à la direction axiale du pneumatique.

2. Pneumatique (1) selon la revendication 1, dans lequel la portion de rainure circonférentielle (11) inclut une portion d'extrémité (11e) au niveau d'un côté dans la direction circonférentielle du pneumatique, et
une extrémité intérieure (17i), dans la direction axiale du pneumatique, de la deuxième partie (17) est située au niveau dudit côté dans la direction circonférentielle du pneumatique par rapport à la portion d'extrémité (11e) au niveau dudit côté de la portion de rainure circonférentielle (11).

3. Pneumatique (1) selon l'une quelconque des revendications 1 à 2, dans lequel, dans la portion de rainure circonférentielle (11), une largeur d'une portion centrale (11c) dans la direction circonférentielle du pneumatique est plus grande que celle de chacune des portions d'extrémité (11e) des deux côtés.

4. Pneumatique (1) selon l'une quelconque des revendications 1 à 3, dans lequel
une pluralité de rainures annexes d'épaulement (20) sont prévues dans la portion en relief d'épaulement (5) et entre les rainures étroites d'épaulement adjacentes (10) de manière s'étendre depuis le bord de roulement (Te) en direction d'un côté intérieur dans une direction axiale du pneumatique et de manière à se terminer dans la portion en relief d'épaulement (5), et
une extrémité intérieure (20i), dans la direction axiale du pneumatique, de chacune des rainures annexes d'épaulement (20) est située à l'intérieur de la portion de rainure circonférentielle (11) dans la direction axiale du pneumatique.

5. Pneumatique (1) selon la revendication 4, dans lequel chaque rainure annexe d'épaulement (20) inclut : une portion axiale (21) qui s'étend le long de la direction axiale du pneumatique au niveau d'un côté extérieur dans la direction axiale du pneumatique par rapport à la portion de rainure circonférentielle (11) ; et une portion inclinée (22) qui s'étend au niveau d'un côté intérieur dans la direction axiale du pneumatique par rapport à la portion de rainure circonférentielle (11) de manière à être inclinée relativement à la direction axiale du pneumatique.

6. Pneumatique (1) selon la revendication 5, dans lequel au moins une partie de la portion inclinée (22) s'étend le long de la portion de rainure axiale (12).

7. Pneumatique (1) selon l'une quelconque des revendications 1 à 6, dans lequel
une portion en relief médiane (6) est démarquée à l'intérieur de la rainure principale d'épaulement (3) dans une direction axiale du pneumatique,
une pluralité de rainures étroites annexes médianes extérieures (25) sont prévues dans la portion en relief médiane (6) de manière à s'étendre depuis la rainure principale d'épaulement (3) en direction d'un côté intérieur dans la direction axiale du pneumatique et de manière à se terminer dans la portion en relief médiane (6), et
chaque rainure étroite annexe médiane extérieure (25) a une longueur plus petite dans la direction axiale du pneumatique que chaque rainure étroite d'épaulement (10).

8. Pneumatique (1) selon la revendication 7, dans lequel chaque rainure étroite annexe médiane extérieure (25) est inclinée dans une direction opposée à celle de la deuxième partie (17) de la portion de rainure axiale (12).
